# EUROPEAN PATENT SPECIFICATION

(11) **EP 0 726 834 B1**
(45) Date of publication and mention of the grant of the patent: **08.07.1998**
(21) Application number: 93923082.7
(22) Date of filing: 04.10.1993
(51) Int. Cl.: B26D 3/16

(54) **A METHOD FOR MANUFACTURING ASPIRATORS FOR MEDICAL AND DENTAL USE**
VERFAHREN ZUR HERSTELLUNG VON ABGASEINRICHTUNGEN FüR ZAHNÄRZTLICHE UND MEDIZINISCHE ZWECKE
PROCEDE DE FABRICATION D'ASPIRATEURS A USAGE MEDICAL ET DENTAIRE

(30) Priority: 02.10.1992 SE 9202889
(43) Date of publication of application: 21.08.1996
(73) Proprietor: ORSING, Ernst, 253 70 Helsingborg (SE)
(72) Inventor: ORSING, Ernst, 253 70 Helsingborg (SE)
(74) Representative: Ström, Tore
(86) International application number: SE9300798
(87) International publication number: WO9407662

(56) References cited:
- EP-A- 0 201 402
- EP-A- 0 347 590
- US-A- 3 821 912

## Description

The invention relates to a method for manufacturing aspirator tubes for medical and dental use, which are provided with two opposite air apertures adjacent at least one end thereof.

A rational manufacture of such aspirator tubes of plastics requires that the air apertures are made when the tube is being extruded and also that the extruded tube length is cut to individual aspirator tubes while the tube length is moving axially. At present the apertures are made by punching which means that flying punches have to be used, i.e. punches which during the punching operation are moving along with the tube length in the axial movement thereof. Also a flying cutting device then must be used. This results in complicated machine constructions and in limitation of the rate of manufacture because the punch as well as the cutting device must be returned in the direction opposite to the moving direction of the tube length between consecutive working operations.

Another drawback is that when one of the air apertures is punched, which is done from the outside of the tube length towards the inside thereof, burrs are obtained at the inside of the tube wall and that the material which is cut off when the aperature is made will land inside the tube length. A die can be used for the other air aperture so that no burr will be obtained at the outside of the tube, and in this case there is of course no risk that the cut off material will land inside the tube length.

The purpose of the invention is to eliminate said drawbacks, and for this purpose the method according to the invention has obtained the characterizing features of claim 1. Then, the cutters are engaged and disengaged with the tube length by a simple reciprocating movement transversely of the tube length (not necessarily perpendicularly to the tube length) and this is made possible by rotating the cutters at a rotational speed which is so high that the working operation can be accomplished on the moving tube length without the necessity of moving the cutters along with the tube length as should have been necessary if the cutters were engaged with the tube length one or two times for each revolution, because the rotational speed then must be sufficiently low in order that the required axial distance between the sites worked on of the tube length will be maintained; this distance is of course determined by the length of the individual aspirator tubes.

In order to explain the invention in more detail reference is made to the accompanying drawings in which
FIG. 1 is a side view of an aspirator tube to be manufactured by the method of the invention,
FIGS. 2 and 3 are fragmentary perspective views of one end portion and the other, respectively, of the aspirator tube,
FIG. 4 is a fragmentary plan view of the tube illustrating the shape of the air apertures
FIG. 5 is a diagrammatic view of a cutter in the shape of a knife for cutting a tube length shown in cross sectional view,
FIG. 6 is a diagrammatic view of a device for making the air apertures in the tube length also shown in cross sectional view, and
FIG. 7 is a perspective view of a constructive embodiment of a device for supporting, mounting and operating knife and cutters.

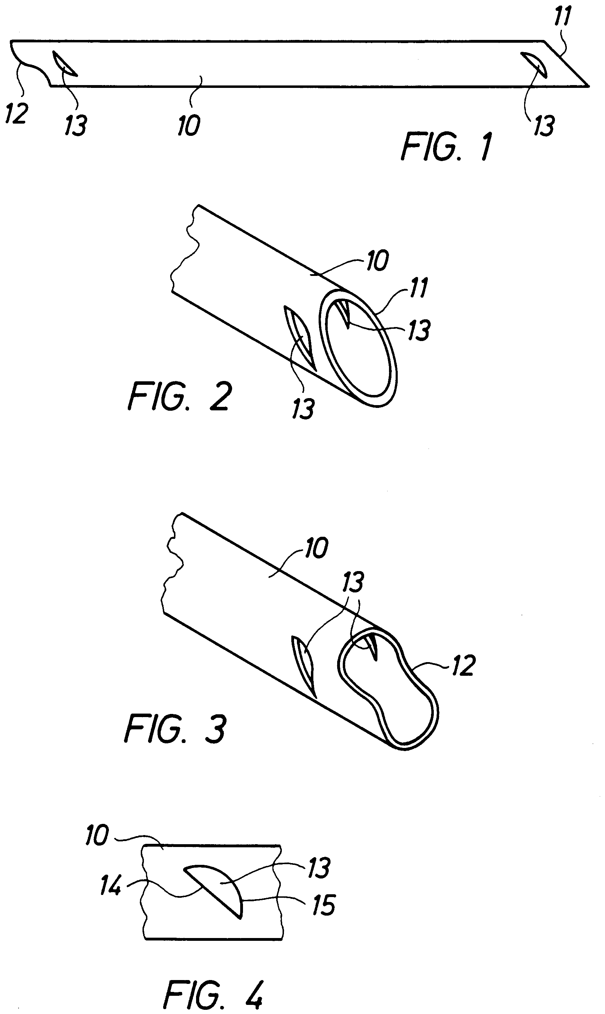

The aspirator tube 10 in FIG. 1 has circular cross sectional shape and is made of relatively hard plastics e.g. polyethylene. At one end thereof the tube is obliquely cut off by a straight cut at 11, the other end being obliquely cut off by an S-shaped cut at 12. Adjacent each end the aspirator tube has two diametrically opposite air apertures 13 defined by a straight edge 14 and a circularly curved edge 15 as best seen in FIG. 4.

For the manufacture of the aspirator tube a continuous tube length is extruded leaving the extruder at a predetermined axial speed which for productional and economical reasons should be as high as admitted by the extruder and the prevailing quality requirements. When the tube length in a conventional manner has passed through a calibrator and a cooler and a following puller the air apertures are initially made and then the tube length is cut for producing the individual aspirator tubes.

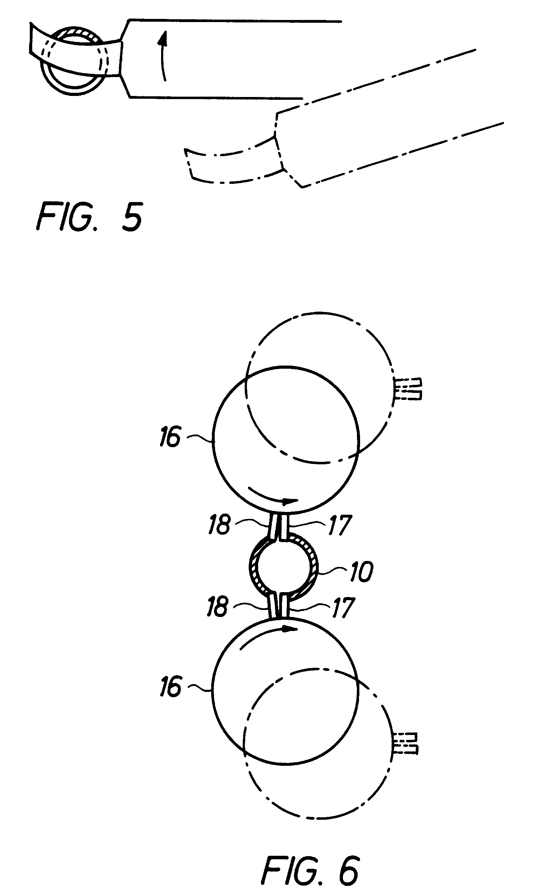

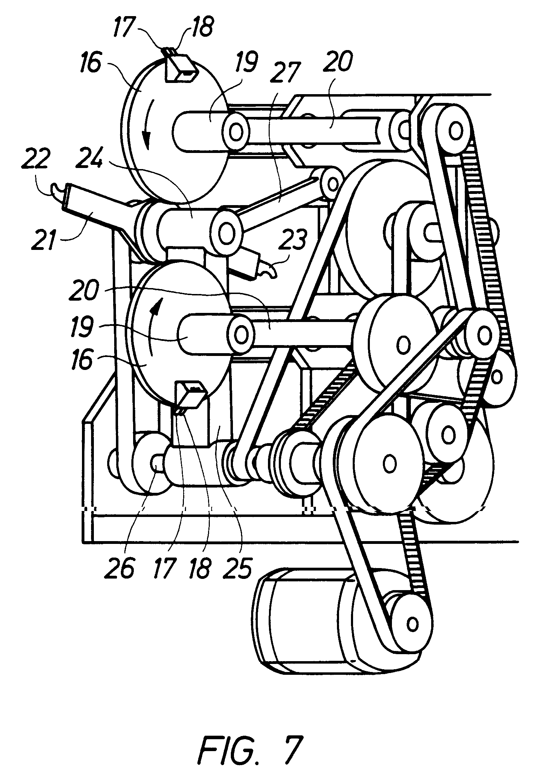

Rotating cutting devices according to FIG. 6 are used for making the air apertures at diametrically opposite sides of the aspirator tube. On rotating discs 16 there are provided two cutters one cutter 17 thereof which is ahead of the other cutter 18 as seen in the rotational direction (indicated by an arrow) is constructed to make a straight cut in the tube wall corresponding to edge 14, while said other cutter 18 is constructed to make the curved cut corresponding to edge 15. Cutter 18 is a recessing cutter so that it lifts out at the same time the cut-out circle segment from the tube wall. The cutters must be cuttingly engaged with the moving tube length at predetermined intervals in order that the finished aspirator tubes shall have the air apertures at the correct locations, and it will be understood that the rotational speed of the discs must be related to the axial moving speed of the tube length. On the other side the discs must not rotate too slowly because the cutting operation then takes such a long time in relation to the axial moving speed of the tube length that the cutters during the cutting operation must be moved along with the tube length. Therefore, in the method according to the invention therefore such a high speed of the discs is chosen as is required in order to avoid simultaneous axial movement of the cutters. The cutters are instead engaged periodically with the tube length while the cutters between the engagements are idling laterally of the tube length. This can easily be effected by mounting the discs according to FIG. 7 in bearings 19 which are mounted to arms 20 which can be pivoted up and down. Thus, the discs are moved periodically towards each other to the position shown by solid lines in FIG. 5, which is the operative position, and away from each other to the position shown by dot-and-dash lines, which is the idling position. The cutters should be in the idling position as long as is necessary in order that the tube length shall have advanced so far that the next position where air apertures are to be made will register with the discs. The discs rotate continuously at one and the same speed. Each disc can have one pair or several pairs of cutters.

When the air apertures have been made the tube length will be cut at pre-determined positions in order to produce the individual aspirator tubes. Such cutting is made by means of a knife 21 similar to a propeller, which has a straight cutter 22 and an S-shaped cutter 23, (FIG. 7). The knife is rotated at a speed sufficiently high to allow the tube length to be cut off without the necessity of simultaneously moving along with the tube length in the axial movement thereof, but it is engaged with the tube length periodically. It is outside the tube length in the intervals therebetween and thus is idling according to the same principles as applied to cutters 17 and 18. According to FIG. 7 knife 21 is rotatably mounted in a bearing 24 on an arm 25 which is pivoted on a shaft 26 and is connected by a connecting rod 27 to a crank or excenter effecting pivotal movement of the arm for displacement of the knife between an operative position and an inoperative position (idling position).

In FIG. 7 there is shown a drive motor and a gear belt transmission for effecting the several movements of cutters and knife but it would not be necessary to describe this arrangement in detail because it is based on conventional transmission technique.

The cutters and knifes should of course be positioned in oblique angle to the axis of the tube length because the aspirator tubes are cut obliquely and the air apertures extend along the oblique end edges.

## Claims

1. Method for manufacturing aspirator tubes (10) for medical and dental use, whereby two opposite air apertures (13) adjacent at least one end of the tube are made in a tube length and/or the tube length is cut to individual aspirator tubes while the tube length is being extruded and is moving axially, characterised in that the air apertures (13) are made by means of continously rotating cutters (17, 18, 22, 23) which are cuttingly engaged with the tube length at pre-determined revolutions only and between said pre-determined revolutions are brought to idle withdrawn from the tube length, the rotational speed of the cutters being as high as is necessary in order to avoid simultaneous axial movement of the cutters.

2. Method according to claim 1,
**characterized** in that the apertures are made in two steps, a first step in which a straight cut (14) is made in the tube wall, and a second step in which a curved cut (15) is made in the tube wall, the ends of said curved cut joining the ends of the straight cut, the portion of the tube wall cut-out by said cuts being lifted out simultaneously.

## Patentansprüche

1. Verfahren zum Herstellen von Absaugrohren (10) für medizinischen und zahnmedizinischen Gebrauch, bei dem in einem Rohrsegment zwei gegenüberliegende Luftöffnungen (13) in der Nähe wenigstens eines Endes des Rohrs hergestellt werden und/oder das Rohrsegment in einzelne Absaugrohre zerschnitten wird, während es extrudiert wird und sich axial bewegt, dadurch gekennzeichnet, daß die Luftöffnungen (13) mittels ununterbrochen sich drehender Schneideinrichtungen (17, 18, 22, 23) hergestellt werden, die mit dem Rohrsegment nur bei vorgegebenen Umdrehungspositionen in Schneideingriff sind und zwischen den vorgegebenen Umdrehungspositionen im Leerlauf sind und dabei vom Rohrsegment zurückgezogen sind, wobei die Drehzahl der Schneideinrichtungen so hoch wie notwendig ist, damit eine gleichzeitige axiale Bewegung der Schneideinrichtungen vermieden wird.

2. Verfahren nach Anspruch 1, dadurch gekennzeichnet, daß die Öffnungen in zwei Schritten hergestellt werden, in einem ersten Schritt, in dem in der Rohrwand ein gerader Schnitt (14) ausgeführt wird, und in einem zweiten Schritt, in dem in der Rohrwand ein gekrümmter Schnitt (15) ausgeführt wird, wobei die Enden des gekrümmten Schnitts mit den Enden des geraden Schnitts verbunden sind und wobei der Abschnitt der Rohrwand, der durch die Schnitte ausgeschnitten wird, gleichzeitig herausgehoben wird.

## Revendications

1. Procédé de fabrication de tubes aspirateurs (10) destinés à un usage médical et dentaire de manière que deux ouvertures à air (13) opposées adjacente au moins à une extrémité du tube soient ménagées dans une longueur de tube et/ou la longueur de tube étant découpée en des tubes aspirateurs individuels, tandis que la longueur de tube est produite par extrusion et est déplacée axialement, caractérisé en ce que les ouvertures à air (13) sont ménagées au moyen d'organes de coupe (17, 18, 22, 23) à rotation permanente qui sont mis en prise, avec une action de coupe, avec la longueur de tube, sur des angles de rotation prédéterminés seulement, et étant mis en position d'attente entre ces angles de rotation prédéterminés, par extraction vis-à-vis de la longueur du tube, la vitesse de rotation des organes de coupe étant aussi élevée que nécessaire pour éviter d'avoir simultanément un déplacement axial des organes de coupe.

2. Procédé selon la revendication 1, caractérisé en ce que les ouvertures sont constituées en deux étapes, une première étape dans laquelle une découpe rectiligne (14) est pratiquée dans la paroi du tube et une deuxième étape dans laquelle une découpe incurvée (15) est pratiquée dans la paroi du tube, les extrémités de ladite découpe incurvée reliant les extrémités de la découpe rectiligne, la partie de la paroi de tube découpée par lesdites découpes étant simultanément enlevées.
